(19)

Europäisches
Patentamt
European
Patent Office
Office européen
des brevets

(11)　**EP 3 194 806 B1**

(12)　**EUROPEAN PATENT SPECIFICATION**

(45) Date of publication and mention
of the grant of the patent:
**03.10.2018　Bulletin 2018/40**

(51) Int Cl.:
***F16H 7/02*** *(2006.01)*　　　　***F16H 7/18*** *(2006.01)*
***F16H 9/24*** *(2006.01)*

(21) Application number: **15753274.8**

(22) Date of filing: **07.08.2015**

(86) International application number:
**PCT/US2015/044234**

(87) International publication number:
**WO 2016/043865 (24.03.2016 Gazette 2016/12)**

(54) **BELT DRIVE WITH COMPRESSION SPAN**

RIEMENTRIEB MIT KOMPRESSIONSSPANNE

ENTRAÎNEMENT À COURROIE AVEC PORTÉE DE COMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2014　US 201414490109**

(43) Date of publication of application:
**26.07.2017　Bulletin 2017/30**

(73) Proprietor: **Gates Corporation
Denver, CO 80202 (US)**

(72) Inventor: **YUAN, Jing
Rochester Hills,Michigan 48307 (US)**

(74) Representative: **Carpmaels & Ransford LLP
One Southampton Row
London WC1B 5HA (GB)**

(56) References cited:
**DE-A1-102007 013 443　　US-A- 5 232 408
US-A- 5 246 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field of the Invention</u>

The invention relates to a belt drive with a compression span, and more particularly, to a toothed belt drive having a drive length which is less than a toothed belt length such that the toothed belt forms a free-standing arcuate span between the first sprocket and the second sprocket on a toothed belt compression span, according to the preamble of claim 1 and as it is disclosed in DE102007013443A.

<u>Background of the Invention</u>

The initial installation tension is the most critical factor to a successful synchronous belt drive. A synchronous belt drive is used to drive machines where a timed or synchronous condition is required. A synchronous belt uses a toothed belt to achieve the desired timing effect.

The conventional synchronous belt drive requires the tension ratio, which is defined as the ratio between the tight side tension and slack side tension, to be about eight (8) for good results. Using a tension ratio of about 8 proves to be a good approach for the constant load drive, for example, the fan drive, conveyer belt drive, and so on.

With high quality synchronous belt development, automotive industries explored the possibility of using synchronous belts to replace the metal chain for the transfer case applications. The traditional transfer case uses a metal chain to split the power from the engine to drive the front wheel and rear wheels. This arrangement requires a chain guide, sealed case, and oil lubrication. The advantage of the belt drive is the complete elimination of the oil, for a so-called dry transfer case.

The challenge of a dry transfer case is the belt initial installation tension. Because the large variation of the torque passing through the transfer case, if a tension ratio of 8 is used the required initial tension is significantly high. The high initial tension results in a poor drive efficiency and belt noise. On the other hand, if the initial tension is too low, the belt may jump a tooth when high torque is encountered.

The concept of using belt backward buckling to achieve the zero tension drive has been explored in the prior art. The idea is to use a belt pitch length longer than the drive length, and let the belt buckle backward on the slack side span. In the prior art device two bearings are placed at the exit and entrance of the slack span and serve as the guide to lead the belt into the desired backward buckling. When the forward torque is applied, the extra belt length is taken up by the backward buckling that forms an arc shape. The belt back bending stiffness is relevant to allowing the belt buckling in the backward direction.

In comparison to a metal chain drive, there is no bending stiffness due to the flexible chain link connections, therefore making it impossible to achieve the backward buckling.

Representative of the art is US patent no. 8,308,589 which discloses a belt and chain drive for vehicles or for use in drive technology with an input shaft and an output shaft supported on a frame, the input shaft and the output shaft project out of the frame, with the following features: a) gear transmissions with gear wheels, which are embodied as belt and chain drives, are located between the input shaft and the output shaft, b) all of the gear wheels are constantly in rotation during operation, c) the gear transmissions located between the input shaft and the output shaft are embodied as belt and chain drives with toothed belts as traction mechanisms and with pulleys as gear wheels, d) the traction mechanism are reinforced with aramid, Kevlar, carbon fibers or other fibrous materials, is characterized in that e) the traction mechanism is pressed into a kidney-like shape onto the pulleys by at least one component during no-load rotation, and that under the effect of load this component does not touch the traction mechanism, and f) the kidney-like shape of the traction mechanism during no-load rotation is formed by a convex curvature of the driving side and by a concave curvature of the slack side, and g) the kidney-like shape of the traction mechanisms under load is formed by a straight shape of the driving side and by an intensified concave curvature of the slack side.

US 5,232,408 discloses a flexible tape drive system which includes a substantially circular cog wheel with a plurality of radially extending cog teeth spaced about its periphery. A cog wheel surround includes an outer guide track with an inner cog race with an inner surface of a diameter slightly larger than the base diameter of the cog and spaced substantially parallel therewith. A pair of oppositely disposed peeler tips are situated adjacent the top of the cog wheel surround between a pair of outer guide tracks and the cog wheel. The tape passes through the guide tracks and bends in a sinuous manner under compressive loading thus forming a series of peaks and valleys along the guide track.

What is needed is a toothed belt drive having a drive length which is less than a toothed belt length such that the toothed belt forms a free-standing arcuate span between the first sprocket and the second sprocket on a toothed belt compression span. The present invention meets this need.

Summary of the Invention

The present invention provides a toothed belt drive as recited in the claims.

Other aspects of the invention will be pointed out or made obvious by the following description of the invention and the accompanying drawings.

Brief Description of the Drawings

The accompanying drawings, which are incorporated in and form a part of the specification, illustrate preferred embodiments of the present invention, and together with a description, serve to explain the principles of the invention.

Figure 1 is a schematic view of a system.
Figure 2 is a chart of the inducing torque versus push out force.
Figure 3 is a chart of the inducing torque versus push out force.

Detailed Description of the Preferred Embodiment

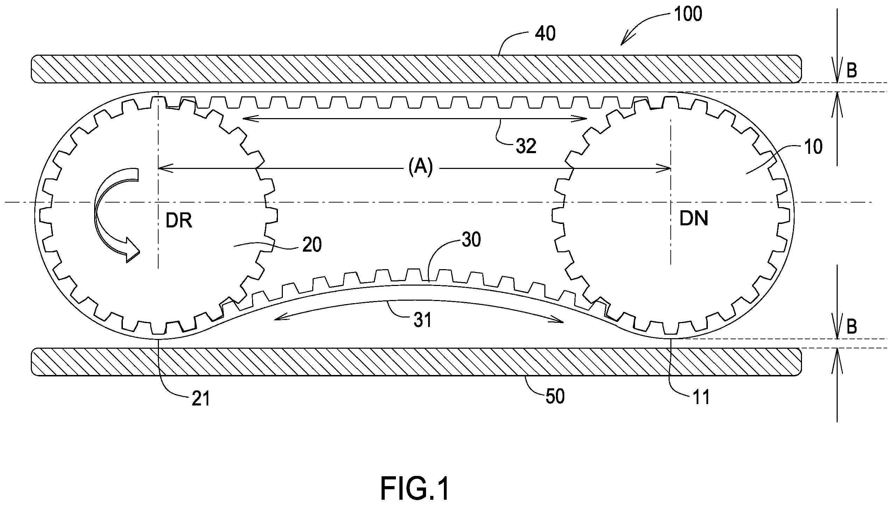

Figure 1 is a schematic view of a system. The system 100 comprises a first sprocket 10 and a second sprocket 20. Toothed belt 30 is trained between the sprockets. A first linear guide 40 is in cooperative relation to the toothed belt between the first sprocket and the second sprocket. A second linear guide 50 is in cooperative relation to the toothed belt between the first sprocket and the second sprocket.

Arcuate section 31 of belt 30 is formed in the compression span between the first and second sprocket. The concave arcuate span 31 is with reference to linear guide 50 in the Figure. Concave span 31 forms in the described position when sprocket 20 is the driving sprocket. Span 32 will become concave when sprocket 10 is the driving sprocket. The arcuate concave span is free-standing and only forms on the slack side of the belt. The concave, slack side of the belt is under an axial compression.

In Figure 1 span 32 is under tension and span 31 is under compression. Under reverse torque span 32 will become concave and span 31 will then be under tension.

In the illustrated example system variables are:

| | |
|---|---|
| Belt length overall | 784mm |
| Belt pitch length | 14mm |
| Sprocket center distance (A) | 219mm |
| Difference belt length to drive length | 10mm |
| Initial guide gap clearance (B) | 2mm |
| Each sprocket | 24 teeth |

The belt length is determined by belt pitch length multiplied by the number of teeth on the belt. For equivalent sprocket diameters, the drive length is two times the sprocket center distance (A), plus the ½ the number of teeth in the first sprocket (10) plus ½ the number of teeth in the second sprocket (20) multiplied by the belt pitch length.

In equation form:

```
Drive length = 2x(A) + (1/2 number of sprocket 10
teeth) x belt pitch length + (1/2 number of sprocket
20 teeth) x belt pitch length
```

Using two stationary linear guides of nylon or other suitable low friction material and placing the linear guides parallel to the belt span can achieve the stable belt backward buckling, i.e. the concave arc portion, under both forward and reverse load on the belt slack side.

The gap (B) between the stationary linear guide 40 and 50 and the belt can be adjustable. A suitable gap (B) is between 1 mm and 2 mm. Assuming a 10 mm difference between the belt length and drive length gives a locked center distance (A) of 219 mm. All numeric variable values are examples only and are not intended to limit the invention.

The inventive drive comprises the combination of a tension span on one side and a compression span on the other. The compression side of the system can be modeled as a straight beam subject to an axial compression force. When the load reaches the critical value, i.e. buckling load, the beam, or in this case the belt, will buckle. The buckling shape will depend on the boundary condition, i.e. clamping support and simple hinged support. This is called instability of the beam buckling. Whether the beam will buckle to one side or the other is not predictable, each having a 50/50 chance as the system has two potential solutions. By placing a guide on one side the beam will buckle away from the guide, thereby becoming a single solution system. That is, the guide forms a boundary condition. Once formed the concave span is self-perpetuating, that is, no further mechanical contact with the concave portion of the belt is required by any other apparatus such as the linear guide in order for the concave span to maintain its concave shape during operation.

A prior art drive, i.e. chain or belt, uses an idler/tensioner to push the span into the concave arc. In the prior art system the idler or slack side span is also under some tension. A chain drive cannot operate under compression because the chain will collapse due to the non-rigid link connections.

In the inventive system the proper difference between the belt length and the drive length must be selected to assure a stable concave arc portion is formed. The greater the difference between the belt length and the drive length, the more pronounced the concave form of the concave arc portion. If the belt is too long, the concave arc portion becomes too steep and belt life is compromised due to the sharp bending of the belt cord as it passes through the concave arc. If the belt length is too short, the concave arc portion is very shallow and un-stable and can buckle forward putting it in contact with the linear guide. This in turn can generate noise as the belt slaps against the guide due to engine torsional vibrations.

Drive length divided by the belt pitch length determines the number of teeth in the belt. The expression $N_f$ can be used where "N" is an integer and "f" is a fractional value. If f = 0, or the belt length matches the drive length an "N+1" belt length is selected, that is, the belt length is one belt pitch (belt tooth) longer than the drive length. If $0 < f < \frac{1}{2}$, the "N+1" tooth belt length is selected. If $f > \frac{1}{2}$, an "N+2" tooth belt length is selected, that is, the belt length is greater than one and half pitch of the drive length and thereby two teeth or twice the belt pitch length. Using the strategy outlined above, the difference between belt length and drive length is between ½ of the belt pitch length and one and half of the belt pitch length. For example, for a 14mm pitch belt the range would be (0.5) x 14mm = 7mm and 1.5 x 14mm = 21mm.

The difference in the overall length of the belt compared to the drive length can also be described as follows. Under a tensile load the belt span length between tangent point 11 and tangent point 21 is equal to the center distance (A). Formation of a stable concave portion requires the length of this belt segment 31 between tangent point 11 and 21 to be greater than the center distance (A). The additional belt length required is in the range of ½ times the belt pitch length to 1.5 times the belt pitch length. In this example the belt pitch length is 14mm and so the range of extra belt length in excess of the drive length is approximately 7mm to 21mm.

The inventive drive is advantageous for use in lock center drives. In a lock center drive no provision is made to change the center distance (A) of the sprockets because each sprocket mounting position is fixed. As described, the belt length is slightly longer than the sprocket center distance (A) which would otherwise cause both belt spans 31, 32 to be linear and not buckled or arcuate. The extra belt length is taken by the slack side concave arc portion, 31, 32.

The inventive drive also has a significant impact on the cost of a system. The need of the fraction pitch to match the drive length in a typical system is completely eliminated due to the longer belt length and the ability to take up the extra length by the slack side concave arc.

In operation, the guide 40 or 50 does not contact the belt. The guide only provides a boundary condition to assure the concave portion forms in the proper direction, that is between the sprockets. Otherwise, the guide does not continually contact the belt once the concave portion is formed. Nor does the guide contact the belt in order to maintain the concave shape. The concave portion is free-standing and requires no mechanical intervention to maintain the arcuate form. The guides 40, 50 momentarily guide the belt when the drive switches the torque, or driver becomes the driven, and driven becomes the driver. The concave span becomes the straight span under the torque reversal, but the belt still does not continually contact the guide due to the gap (B).

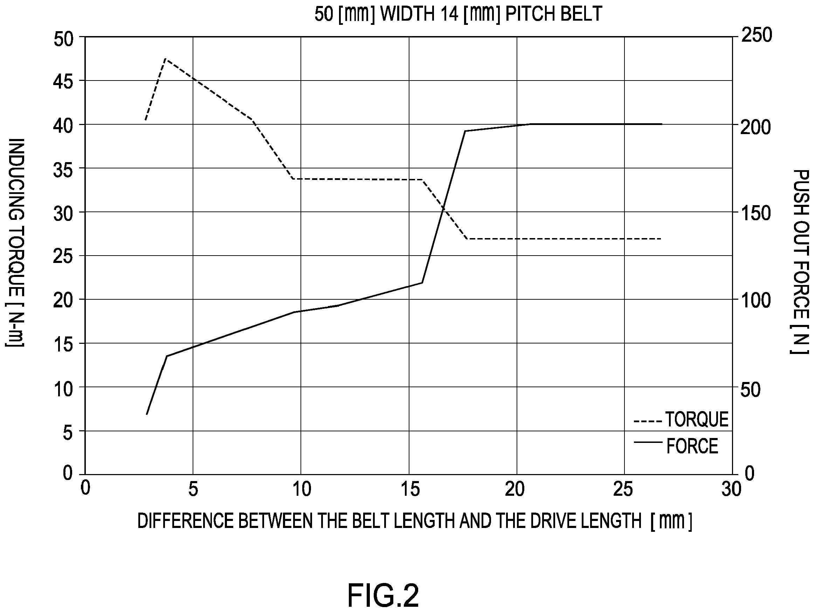

Figure 2 is a chart of the inducing torque versus push out force. The belt in this example is 50 mm in width and has a 14 mm pitch. The push out force is the force required to push the concave portion away from the driving sprocket. The push out force increases as the difference between the belt length and drive length increases.

The inducing torque is the torque required to induce the slack side span into the concave arc 31. At start up, a concave arc portion can exist but the belt will contact a guide 40 or 50 at the sprocket tangent point due to the bulging effect. When the inducing torque is applied, the bulging portion straightens and the gap (B) develops between the guide and the belt. The lower the inducing torque the more easily the belt forms the concave arc portion.

The inducing torque decreases as the difference between the belt length and the drive length increases. The difference between the belt length and the drive length determines the "depth" of the concave or buckled portion of the belt.

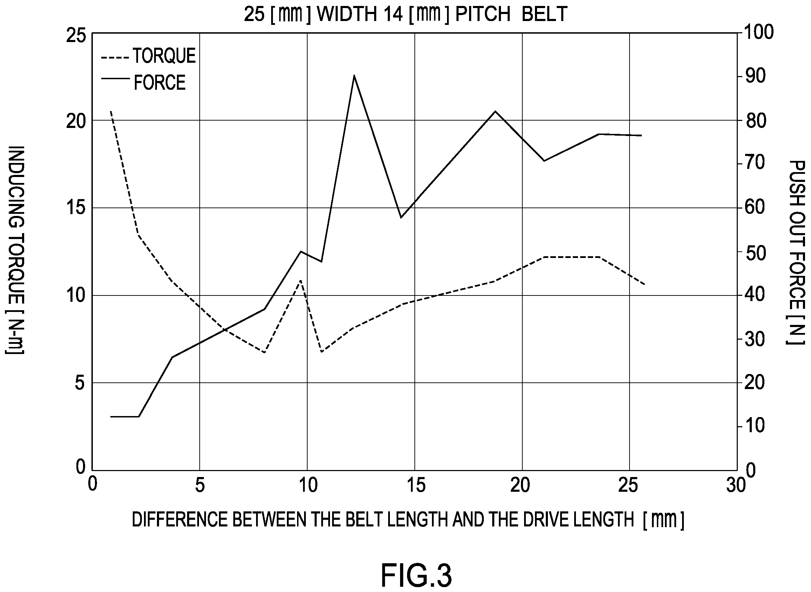

Figure 3 is a chart of the inducing torque versus push out force. The belt in this example is half the width of the belt in Figure 2, that is, 25mm in width.

## Claims

1. A toothed belt drive (100) with a compression span (31) comprising:

   a first sprocket (10) having a first number of teeth;
   a second sprocket (20) having a second number of teeth, wherein a centre of the second sprocket (20) is a distance A from a centre of the first sprocket (10);
   a toothed belt (30) having a toothed belt length and a belt pitch length, wherein the toothed belt (30) is trained between the first sprocket (10) and the second sprocket (20), and **characterized by**
   a first linear guide member (40) in cooperative relation to and having a predetermined clearance distance (B) from the toothed belt (30);
   a second linear guide member (50) in cooperative relation to and having a predetermined clearance distance (B) from the toothed belt (30); wherein
   the toothed belt drive (100) has a drive length which is (2A) + (0.5 x first number of teeth x belt pitch length) + (0.5 x second number of teeth x belt pitch length), and
   the toothed belt length is greater than the drive length by between 0.5 and 1.5 times the belt pitch length, such that the toothed belt (30) forms a free-standing arcuate span (31) between the first sprocket (10) and the second sprocket (20) on a toothed belt compression span (31), wherein the arcuate span (31) is concave with respect to the first or the second linear guide member (40, 50).

2. The belt drive as in claim 1 wherein the arcuate span (31) is concave with respect to the first linear guide member (40).

3. The belt drive as in claim 1 wherein the arcuate span (31) is concave with respect to the second linear guide member (50).

## Patentansprüche

1. Zahnriementrieb (100) mit einer Kompressionsspanne (31), umfassend:

   ein erstes Kettenrad (10) mit einer ersten Anzahl von Zähnen;
   ein zweites Kettenrad (20) mit einer zweiten Anzahl von Zähnen, wobei sich eine Mitte des zweiten Kettenrads (20) in einem Abstand A von einer Mitte des ersten Kettenrads (10) befindet;
   einen Zahnriemen (30) mit einer Zahnriemenlänge und einer Riementeilungslänge, wobei der Zahnriemen (30) zwischen dem ersten Kettenrad (10) und dem zweiten Kettenrad (20) geführt ist, und **gekennzeichnet durch**
   ein erstes lineares Führungsglied (40), das in zusammenwirkender Beziehung zu dem Zahnriemen (30) steht und einen vorbestimmten lichten Abstand (B) von dem Zahnriemen (30) hat;
   ein zweites lineares Führungsglied (50), das in zusammenwirkender Beziehung zu dem Zahnriemen (30) steht und einen vorbestimmten lichten Abstand (B) von dem Zahnriemen (30) hat; wobei
   der Zahnriementrieb (100) eine Trieblänge aufweist, die (2A) + (0,5 x erste Anzahl von Zähnen x Riementeilungslänge) + (0,5 x zweite Anzahl von Zähnen x Riementeilungslänge) ist, und
   die Zahnriemenlänge um zwischen dem 0,5- und 1,5-Fachen der Riementeilungslänge größer als die Trieblänge ist, so dass der Zahnriementrieb (100) eine freistehende bogenförmige Spanne (31) zwischen dem ersten Kettenrad (10) und dem zweiten Kettenrad (20) an einer Zahnriemenkompressionsspanne (31) bildet, wobei die bogenförmige Spanne (31) bezüglich des ersten oder des zweiten linearen Führungsglieds (40, 50) konkav ist.

2. Riementrieb nach Anspruch 1, wobei die bogenförmige Spanne (31) bezüglich des ersten linearen Führungsglieds konkav ist.

3. Riementrieb nach Anspruch 1, wobei die bogenförmige Spanne (31) bezüglich des zweiten linearen Führungsglieds (50) konkav ist.

## Revendications

1. Entraînement à courroie dentée (100) présentant une portée de compression (31), comprenant:

un premier pignon (10) comportant un premier nombre de dents;

un second pignon (20) comportant un second nombre de dents, dans lequel un centre du second pignon (20) se trouve à une distance A d'un centre du premier pignon (10);

une courroie dentée (30) présentant une longueur de courroie dentée et une longueur de pas de courroie, dans lequel la courroie dentée (30) est entraînée entre le premier pignon (10) et le second pignon (20);

et **caractérisé par**:

un premier élément de guidage linéaire (40) dans une relation de coopération avec et présentant une distance d'espacement prédéterminée (B) par rapport à la courroie dentée (30);

un second élément de guidage linéaire (50) dans une relation de coopération avec et présentant une distance d'espacement (B) par rapport à la courroie dentée (30);

dans lequel l'entraînement à courroie dentée (100) présente une longueur d'entraînement qui est égale à (2A) + (0,5 x le premier nombre de dents x la longueur de pas de courroie) + (0,5 x le second nombre de dents x la longueur de pas de courroie), et

la longueur de la courroie dentée est plus grande que la longueur d'entraînement de entre 0,5 et 1,5 fois la longueur de pas de la courroie, de telle sorte que la courroie dentée (30) forme une portée courbe autoportante (31) entre le premier pignon (10) et le second pignon (20) sur une portée de compression de courroie dentée (31), dans lequel la portée courbe (31) est concave par rapport au premier ou au second élément de guidage linéaire (40, 50).

2. Entraînement à courroie selon la revendication 1, dans lequel la portée courbe (31) est concave par rapport au premier élément de guidage linéaire (40).

3. Entraînement à courroie selon la revendication 1, dans lequel la portée courbe (31) est concave par rapport au second élément de guidage linéaire (50).

FIG.1

FIG.2

**25 [mm] WIDTH 14 [mm] PITCH BELT**

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007013443 A
- US 8308589 B
- US 5232408 A